# EUROPEAN PATENT APPLICATION

(11) **EP 2 816 517 A1**
(43) Date of publication of application: **24.12.2014**
(21) Application number: 14173160.4
(22) Date of filing: 19.06.2014
(51) Int. Cl.: G06Q 20/36, G06Q 20/32

(54) **Method and apparatus for combining different kinds of wallets on a mobile device**

(30) Priority: 20.06.2013 KR 20130070842
(71) Applicant: Samsung Electronics Co., Ltd, Gyeonggi-do 443-742 (KR)
(72) Inventor: Kang, Bogyeong, Gyeonggi-do 443-742 (KR); Son, Jungje, Gyeonggi-do 443-742 (KR); Lee, Byungrae, Gyeonggi-do 443-742 (KR)
(74) Representative: Jenkins, Richard Gavin

(57) **Abstract**

A method and an apparatus for combining different wallets on a mobile device are provided. The method of combining a plurality of wallet applications for a commercial transaction service using a mobile device includes acquiring wallet data including at least one of payment information or non-payment information provided by each of the plurality of wallet applications; combining the wallet data according to predetermined regulation information; and providing the combined wallet data through a combination application.

## Description

### BACKGROUND OF THE INVENTION

### 1. Field of the Invention

The present invention relates generally to a method and an apparatus for combining different kinds of wallets on a mobile device, and more particularly, to a method and an apparatus for providing payment and non-payment information, which are provided through various wallet applications, through one combined application on a mobile device.

### 2. Description of the Related Art

With the popularity of mobile devices, such as a smart phone, which carry out data communication, the needs of mobile device users who want to introduce various kinds of information into a mobile device gradually increase. In order to satisfy one of the needs of the mobile device users, a plurality of mobile electronic wallets (hereinafter, referred to as "wallets" or "wallet applications") are provided and used, in which membership cards, coupons, tickets, and mileages, as well as credit cards which are a payment means used in a commercial transaction online and offline, are allowed to be used in a mobile device not in a real form but in a data form.

The wallets are provided in application form on the mobile device. A provider of a wallet application may invite member stores which provide a mobile wallet service through a wallet, and the member stores may provide information on a membership, a coupon, mileage, and the like, which are related to services provided thereby, through the wallet to a user of the mobile device. Further, a credit card company may provide payment information in the form of a mobile credit card to a user through a contract with a wallet application provider. The user may use the wallet application in the member store to pay for goods by means of the mobile credit card.

However, the serviced wallets are made based on different formats from one another, and they cannot share data therebetween. In this case, each member store must provide a service through different wallet applications due to competition for securing member stores between wallet providers. Accordingly, the user of the mobile device is required to install plural wallet applications and use a different wallet application in each member store. In addition, payment schemes supported by every wallet application are different. Therefore, although the user installs a wallet application on the mobile device supporting the mobile credit card, it is impossible to pay for goods without use of a credit card in the real form according to the member store.

### SUMMARY OF THE INVENTION

The present invention has been made to address the above-mentioned problems and disadvantages, and to provide at least the advantages described below. Accordingly, an aspect of the present invention provides a method of combining and managing data provided by various kinds of wallet applications through a mobile device, thereby improving the convenience of a user of the mobile device.

In accordance with an aspect of the present invention, there is provided a method of combining a plurality of wallet applications for a commercial transaction service using a mobile device. The method includes acquiring wallet data including at least one of payment information or non-payment information provided by each of the plurality of wallet applications; combining the wallet data according to predetermined regulation information; and, providing the combined wallet data through a combination application.

In accordance with another aspect of the present invention, there is provided a method of combining a plurality of wallet applications for a commercial transaction service using a mobile device. The method includes transferring information of each wallet application and wallet data which includes at least one of payment information or non-payment information provided by each of the plurality of wallet applications; receiving combined wallet data from a wallet combining server; and storing the combined wallet data and providing the combined wallet data through a combining application.

In accordance with another aspect of the present invention, there is provided an apparatus for combining a plurality of wallet applications for a commercial transaction service using a mobile device. The apparatus includes a processor configured to acquire wallet data including at least one of payment information or non-payment information provided by each of the plurality of wallet applications, to combine the wallet data according to predetermined regulation information, and to provide the combined wallet data through a combining application.

In accordance with another aspect of the present invention, there is provided an apparatus for combining a plurality of wallet applications for a commercial transaction service using a mobile device. The apparatus includes a processor configured to transfer information of each of the plurality of wallet applications and a wallet data which includes at least one of payment information or non-payment information provided by each of the plurality of wallet applications, to a wallet combining server, to receive combined wallet data from the wallet combining server, to store the combined wallet data, and to provide the combined wallet data through a combining application.

### BRIEF DESCRIPTION OF THE DRAWINGS

The above and other aspects, features, and advantages of the present invention will be more apparent from the following detailed description, taken in conjunction with the accompanying drawings, in which:
FIG. 1 is a view illustrating a combination of wallets according to a first embodiment of the present invention;
FIG. 2 is a flowchart illustrating a process of combining wallets according to an embodiment of the present invention;
FIG. 3 is a view illustrating a combination of wallets according to a second embodiment of the present invention;
FIG. 4 is a data flow diagram illustrating a process of combining data of the wallets between a mobile device and a server;
FIG. 5 is a view illustrating a configuration of a cloud system through which a wallet service is provided, according to a third embodiment of the present invention; and
FIG. 6 is a data flow diagram illustrating a process of providing wallet data when the wallet data is managed in a cloud system.

### DETAILED DESCRIPTION OF EMBODIMENTS OF THE PRESENT INVENTION

Hereinafter, an embodiments of the present invention are described in detail wi th reference to the accompanying drawings. It should be noted that the same elements are designated by the same reference numerals although they are shown in different dra wings. Further, detailed descriptions related to well-known functions or configurations t hat may obscure the present invention are omitted.

Further, although the following description of embodiments of the present invention are directed to mobile terminals such as a smartphone and a tablet that allow for data communication, it can be understood by those skilled in the art that the main gist of the present invention may also be applied to any other terminal in which similar technologies are implemented, with slight modifications, without substantially departing from the scope of the present invention.

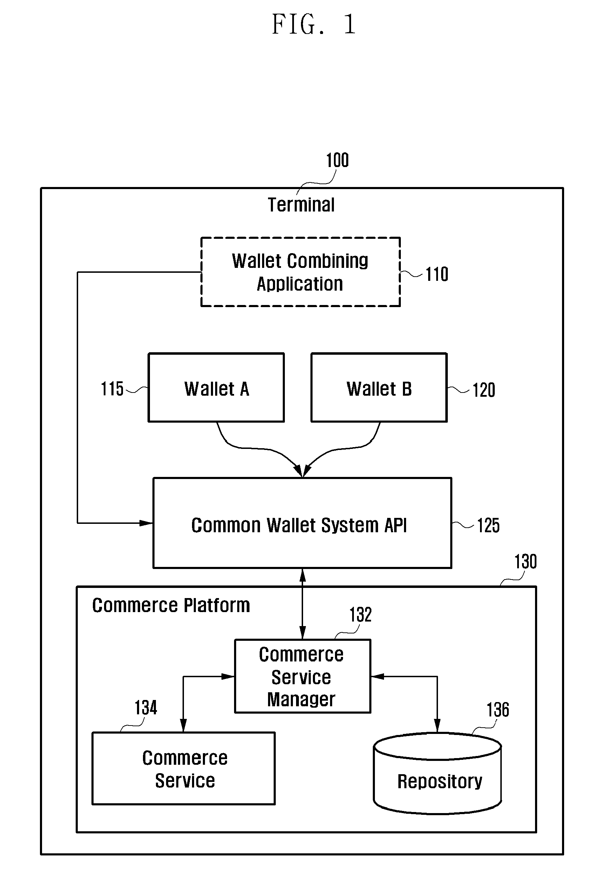

FIG. 1 is a view illustrating a combination of wallets according to a first embodiment of the present invention.

Referring to FIG. 1, a process of combining a plurality of wallets is carried out by one of a wallet combining application 110 in a mobile device or a terminal 100, or a plurality of wallet applications 115 and 120. The wallet combining application 110 or each wallet application 115 or 120 acquires information necessary for a combination of wallets by using an Application Program Interface (API) 125 of a predetermined common wallet system.

The API 125 of the common wallet system is a standardized interface by which various applications of the terminal are allowed to use various services provided by a commerce platform 130 of the terminal 100. The wallet combining application 110 or each wallet application 115 or 120 calls the commerce platform 130 through the API 125 of the common wallet system, and acquires information returned from the commerce platform 130.

The commerce platform 130 is a platform which provides a service used by a wallet or a Point Of Sale (POS) in online and offline commercial transaction. In order to provide a service, the terminal has an embedded Secure Element (eSE) or a Universal Subscriber Identity Module (USIM) card, which performs a function as a security module, mounted thereon. The various services provided by the commerce platform 130 may be implemented in an applet form on the JAVA Operating System (OS) of a secure element. The API 125 of the common wallet system additionally has a function of controlling access to the commerce platform 130 for the wallet applications 115 and 120 having authority of using the service provided by the commerce platform 130.

The commerce platform 130 includes a commercial transaction service manager 132. The commercial transaction service manager 132 manages a list 134 of commercial transaction services which every wallet application 115 or 120 uses. The list 134 of the commercial transaction services may be added, deleted, and updated by the commercial transaction service manager 132.

Further, the commercial transaction service manager 132 stores service control information and service management information in a separate storage unit 136. Further, the commercial transaction service manager 132 searchs for and updates the service control information and the service management information in the separate storage unit 136. The service control information is managed in the form of {service ID, allowed wallet application ID (hereinafter, referred to as Application ID (AID))} as information of a wallet application which is allowed to use each commercial transaction service. Furthermore, the service management information is managed in the form of {service ID, registered wallet application ID} as information of a wallet application which is registered to use each commercial transaction service.

In addition, the commercial transaction service manager 132 directly stores and manages wallet data which are payment and non-payment information which are managed by each wallet application 115 or 120, or manages information on a directory in which the wallet data is stored. Moreover, regulation information of each wallet data is stored in a field of the wallet data or in the form of separate data. The regulation information may include information on whether a combination of the wallet data is allowed, or information on a processing method in an existing wallet application in a case where the wallet data is combined with another wallet application. In the present invention, the method of processing the combined wallet data includes an update of some information, such as a deletion of the wallet data from the existing wallet application, or a counter in the existing wallet application.

When the wallet combining application 110, or each wallet application 115 or 120, requests information, which is managed by the commerce transaction platform 130, through the API 125 of the common wallet system, the commercial transaction service manager 132 determines authority of the application and provides the information.

The API 125 of the common wallet system includes the following functions; however, the present invention is not limited thereto, and may be implemented in various forms in order to perform similar functions.

*getServiceLists (AID),* which calls a list of services provided by the commercial transaction platform 130. The commercial transaction service manager 132 may provide only a list of the services which are admitted for an ID of the wallet application requesting the service control information.

*requestserviceRegister (AID, serviceID),* where the wallet application requests a registration for a specific service. The commercial transaction service manager 132 admits the registration of the ID of the wallet application when it is determined through the service control information that the ID of the corresponding wallet application is admitted to use a requested service, and registers the ID of the wallet application in the service management information.

*getServiceManagementInfo ()*, which requests service provided by the commercial transaction platform 130, and information of the wallet application registered to correspond to the service. This function is used in the wallet combining application 110 or each wallet application 115 or 120 to combine the wallets. The commercial transaction service manager 132 identifies the service control information and provides the service management information only when access is admitted.

*getWalletData ()*, where the application, which intends to perform the combination of the wallet, requests wallet data of wallet applications which are objects to be combined. The commercial transaction service manager 132 provides the wallet data through the service control information only when the request is admitted.

*getWalletDataPath ()*, where the application, which intends to perform the combination of the wallet, requests information on a path for accessing the wallet data instead of the wallet data. The commercial transaction service manager 132 provides the wallet data through the service control information only when the request is admitted.

As a plurality of wallet applications installed in the terminal 100 uses the commercial transaction service through a common interface, the combination of the wallet data which the plurality of wallet applications manage may be achieved. Accordingly, the user can use the service through one combining application without an execution of a wallet application corresponding to the service even when using the service.

On the other hand, a reference may be set for combining the plurality of the wallet applications. As an example, if one of the plural wallet applications is set as a main wallet and the remaining wallet applications are set as the combined wallets, the wallet data of the other wallet applications are combined with the main wallet. The main wallet and the combined wallets are set by the user, and the wallet combining application 110 or each wallet application 115 or 120 provides a user interface (UI) so that the user can set the main wallet and the combined wallets.

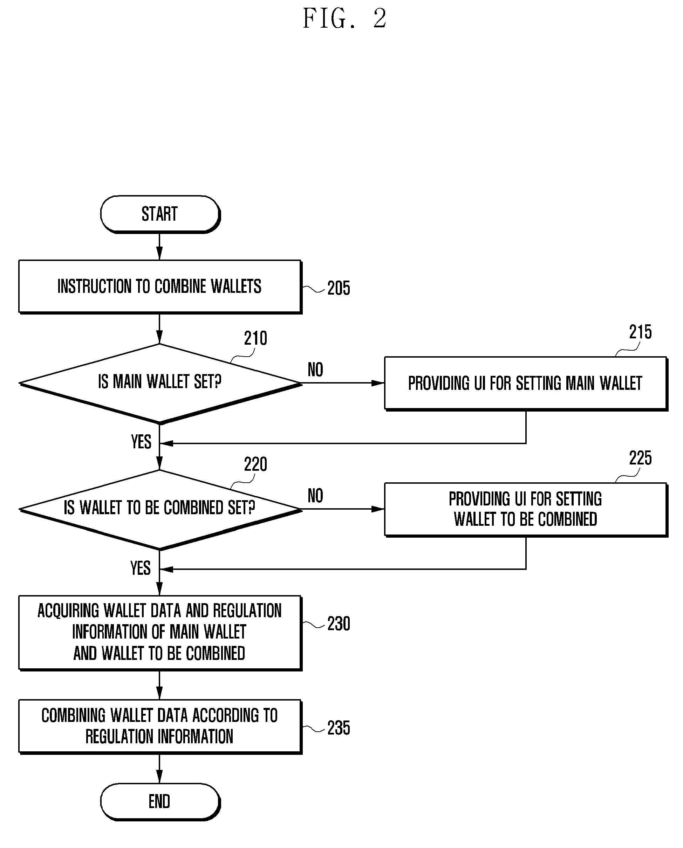

FIG. 2 is a flowchart illustrating a process of performing a combination of wallets according to an embodiment of the present invention. The process of FIG. 2 is performed by the wall combining application 110 or each wallet application 115 or 120.

Referring to FIG. 2, in step 205, an instruction to combine the wallets is input by the user, or is automatically created to enable an operation of combining the wallets to be initiated. The application, which performs the combination of the wallets, identifies whether the main wallet is set in step 210, and if the main wallet is not set, the application provides the UI for setting the main wallet so as to allow the user to set the main wallet in step 215.

After the main wallet is set, the application performing the combination of the wallets identifies whether the wallet to be combined is set in step 220. If the wallets to be combined are not set, the application provides the UI so as to enable the user to set the wallets to be combined in step 225.

Then, the application performing the combination of the wallets acquires the wallet data of the main wallet and the wallet to be combined, and the regulation information. The wallet data and the regulation information are acquired from the commerce platform in the terminal 100 through the API 125 of the common wallet system.

The application performing the combination of the wallets combines the wallet data based on the regulation information of each wallet data in step 235. In this event, the combination of the wallet data may be performed even though the regulation information is not predetermined. The application performing the combination of the wallets may determine whether the combination of the wallets is permitted or not permitted when there is no set regulation information.

The combined wallet data is provided through the newly created and combined wallet, or through the main wallet. Further, after the combination of the wallet data is completed, the wallet data may be deleted, corrected, or updated in the existing wallet application to be combined.

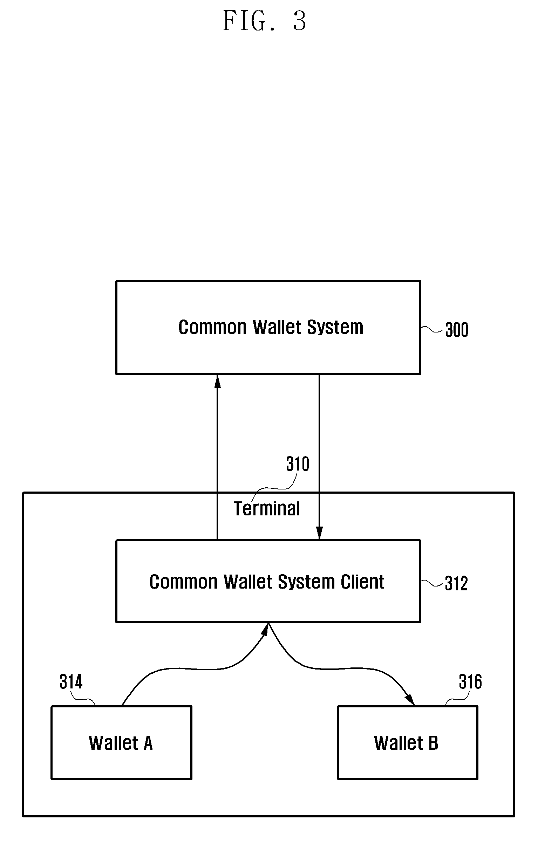

FIG. 3 is a view illustrating the combination of wallets according to the second embodiment of the present invention.

Referring to FIG. 3, a common wallet system client 312 is installed in the terminal 310, and a common wallet system 300 is installed in a server connected to the terminal 310 through a wireless network. That is, in the second embodiment of the present invention, since a process of combining the wallets is performed outside of the terminal 310, the common wallet system 300 supports the process of combining the wallets for a plurality of terminals, and the terminal 310 receives and stores the combined wallet data after transmitting the wallet data to be combined.

In the embodiment of the present invention of FIG. 3, assuming that a wallet A 314 is a wallet to be combined, and a wallet B 316 is a main wallet, the common wallet system client 312 of the terminal 310 transmits a request to combine the wallets to the common wallet system 300 of the server. The transmission of the request to combine the wallets is performed according to the instruction of the user.

Further, the request to combine the wallets includes an ID (wallet B) of the main wallet, an ID (wallet A) of the wallet to be combined, and the wallet data of each wallet, and further includes information of the user which is registered in the common wallet system 300. The user information may be used for a backup and the like, and for example, may be used in preparation for a case where data is missed due to a connection problem while the combined data is transmitted to the terminal 310. Further, the user information may include regulation information of the wallet data.

The common wallet system 300 combines the wallet data received from the terminal 310. The combination of the wallet data is performed according to a method described with relation to the first embodiment. That is, the common wallet system 300 determines whether the combination of the wallets is permitted based on the regulation information set in correspondence to each wallet data, and a method of processing the existing wallet data after the combination, and combines the wallet data according to the determination. The regulation information is stored in the common wallet system 300, and is included in the user information received from the terminal 310.

According to the second embodiment of the present invention as described above, since the combination of the wallets is performed outside of the terminal 310, there is no hindrance to the user even though the wallet data is not created in the standardized form in the terminal 310. Each wallet data is combined in the common wallet system 300 of the server after being processed according to the standardized form.

After the combination of the wallet data is completed, the common wallet system 300 transmits the combined wallet data to the terminal 310. Simultaneously, the common wallet system 300 may transmit the ID of the main wallet to which the wallet data is able to be added, along with the combined wallet data.

The common wallet system client 312, which received the combined wallet data from the common wallet system 300, stores the combined wallet data in the wallet data storage unit corresponding to the main wallet 316, or transmits the combined wallet data in a push manner after activating the main wallet 316. The main wallet 316 stores the combined wallet data, and terminates the process of combining the wallets. At this time, the main wallet 316 outputs a message indicating completion of the combination on a screen, so as to inform the user.

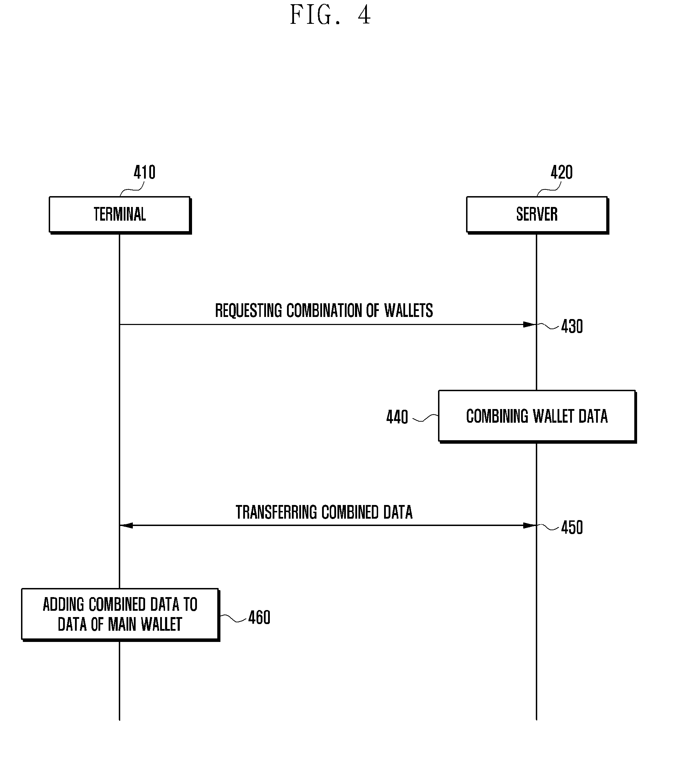

FIG. 4 is a data flow diagram illustrating a process of combining the wallets between the terminal 410 and the server 420.

Referring to FIG. 4, the common wallet system client installed in the terminal 410 transmits a request for the combination of the wallets in the common wallet system installed in the server 420 in step 430. The request for the combination of the wallets includes at least one of ID of the main wallet and the wallet to be combined, the wallet data, or the user information.

The common wallet system of the server 420 combines the wallet data received from the terminal 410 in step 440. At least one of the regulation information or the user information as described above is used in the combination of the wallet data. Further, in the combination of the wallet data, a format of the wallet data of the main wallet is used as a reference of the combination, but the reference of the combination is not limited to the format of the wallet data.

The server 420 transmits the combined wallet data to the terminal 410 in step 450, and the terminal 410 adds the combined wallet data to the stored wallet data corresponding to the main wallet, and then, terminates a process of combining the wallets.

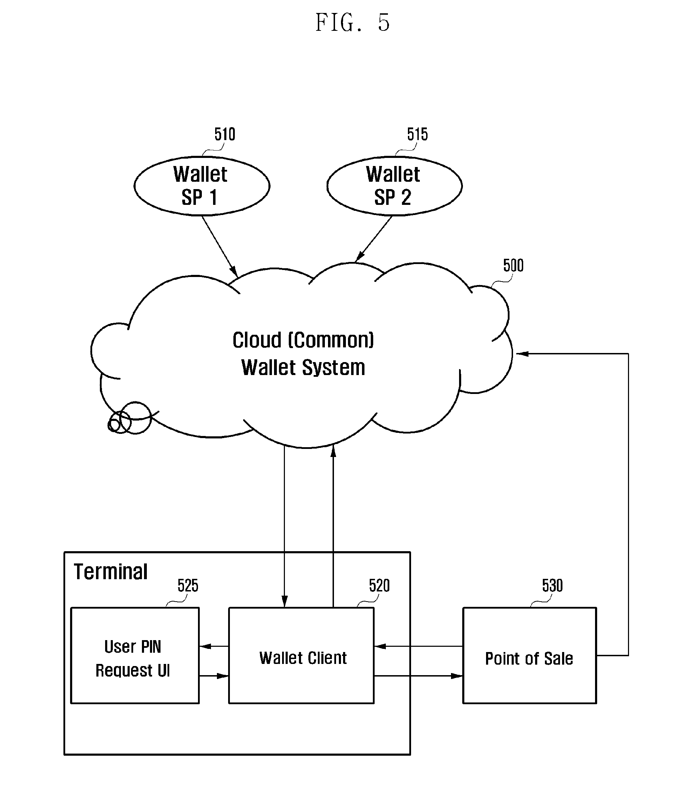

FIG. 5 is a view illustrating a configuration of a cloud system through which a wallet service is provided, according to the third embodiment of the present invention.

Referring to FIG. 5, in the third embodiment of the present invention, the wallet application is installed in the terminal, and manages the wallet data in the cloud 500 instead of providing the wallet data. Each of wallet service providers 510 and 515 stores the data related to the service that they provide, in the cloud 500 instead of the terminal.

The cloud service is a server of a provider who provides a computing service, and allows software and data to be stored in a central computer connected to a network. Further, the cloud service allows the terminal to use the data anytime and anywhere if the terminal can access the network.

When the POS system 530 of the commercial store requests the terminal of the wallet data, the wallet client 520 of the terminal transmits necessary information to the cloud 500 and requests the wallet data, and the cloud 500 provides the wallet data to the terminal based on the information that the terminal transmits. On the other hand, the wallet client 520 of the terminal provides a UI 525 requesting authentication information in order to receive an input of user authentication information necessary for a request of the wallet data to the cloud 500.

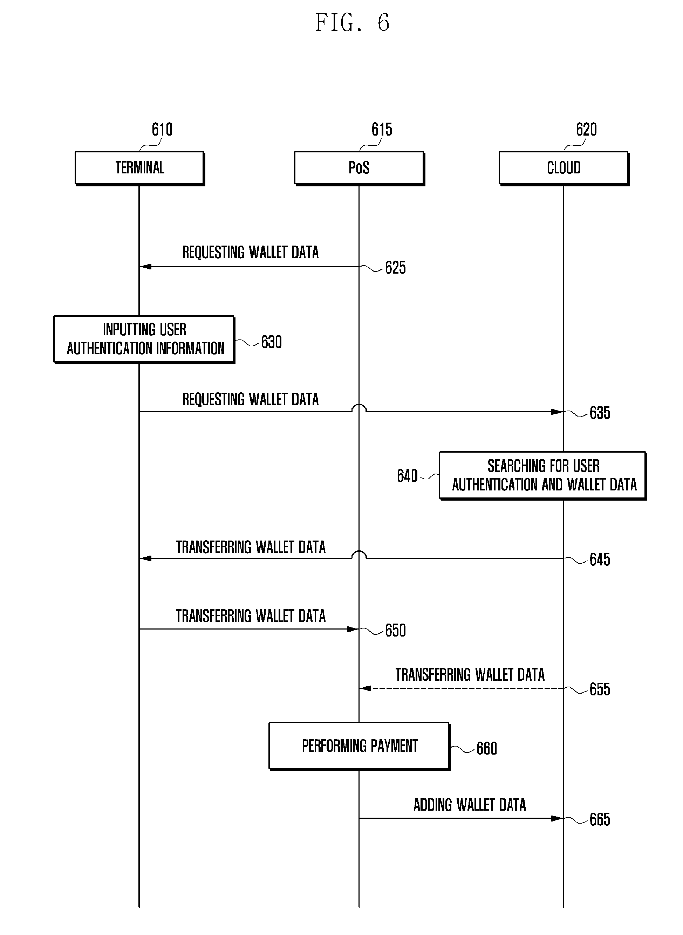

FIG. 6 is a data flow diagram illustrating a process of providing wallet data when the wallet data is managed in a cloud system.

Referring to FIG. 6, when the terminal 610 receives the request of the wallet data from the POS 615 in step 625, the wallet client provided to the terminal 610 provides a UI for inputting a Personal Identification Number (PIN) to the user, so as to receive the authentication information of the user in step 630.

The wallet client of the terminal 610 transmits information on the member store, such as an ID of the member store, as well as the authentication information of the user to the cloud system 620 so as to request the wallet data in step 635. The cloud system620 authenticates the user of the terminal 610 by using the user authentication information in step 640, and searches for the wallet data, e.g., information on various promotions that the service provider provides, based on the ID of the member store when the authentication of the user succeeds.

Then, the cloud system 620 transmits the wallet data and a One-Time Password (OTP) to the terminal 610 in step 645, and the wallet client of the terminal 610 transmits the wallet data including the promotion information, and the OTP to the POS 615 in step 650.

However, the wallet data may be directly transferred from the cloud system 620 to the POS 615 in step 655.

The POS 615 completes a payment process by applying the wallet data to purchasing information in step 660. Further, the POS 615 additionally registers the wallet data, such as additional promotion information, to the cloud system 620 by using the OTP in step 665.

Those skilled in the art can appreciate that it is possible to implement the present invention in other specific forms without changing the technical idea or the indispensable characteristics of the present invention. Therefore, it should be understood that the above-described embodiments are illustrative and are not limiting under any possible interpretation. The scope of the present invention is defined by the appended claims to be described later, rather than the detailed description. Accordingly, it should be appreciated that all modifications or variations derived from the meaning and scope of the appended claims and their equivalents fall within the scope of the present invention.

Although embodiments of the present invention have been shown and described in the present invention and the drawings, they are used in general sense in order to easily explain technical contents of the present invention, and to help comprehension of the present invention, and are not intended to limit the scope of the present invention. It is obvious to those skilled in the art to which the present invention pertains that other modified embodiments may be implemented without departing from the spirit and scope of the present invention as defined by the appended claims and their equivalents.

## Claims

1. A method of combining a plurality of wallet applications for a commercial transaction service using a mobile device, the method comprising:
acquiring wallet data including at least one of payment information or non-payment information provided by each of the plurality of wallet applications;
combining the wallet data according to predetermined regulation information; and
providing the combined wallet data through a combining application.

2. The method as claimed in claim 1, wherein the combining application is one of the plurality of wallet applications.

3. The method as claimed in claim 1, wherein the plurality of wallet applications includes a predetermined main wallet and at least one wallet to be combined, and the main wallet is the combining application.

4. The method as claimed in claim 3, wherein in combining the wallet data, at least one of a user interface for setting the main wallet or a user interface for setting a wallet to be combined is provided.

5. The method as claimed in claim 1, wherein the regulation information includes at least one of information on whether the plurality of wallet applications is combined and information on a processing of an original wallet data after the wallet data is combined.

6. The method as claimed in claim 1, wherein the wallet data and the regulation information are acquired from a commerce platform in the mobile device through a predetermined Application Program Interface (API).

7. The method as claimed in claim 1, further comprising:
receiving the wallet data through a wireless network from the mobile device; and
transferring information of the combined wallet data and the combining application to the mobile device through the wireless network.

8. The method as claimed in claim 7, wherein the regulation information is included in user information received from the mobile device.

9. An apparatus for combining a plurality of wallet applications for a commercial transaction service using a mobile device, the apparatus comprising:
a processor configured to acquire a wallet data including at least one of payment information or non-payment information provided by each of the plurality of wallet applications, to combine the wallet data according to predetermined regulation information, and to provide the combined wallet data through a combining application.

10. The apparatus as claimed in claim 9, wherein the combining application is one of the plurality of wallet applications.

11. The apparatus as claimed in claim 9, wherein the plurality of wallet applications includes a predetermined main wallet or at least one wallet to be combined, and the main wallet is the combining application.

12. The apparatus as claimed in claim 11, wherein the processor is further configured to provide at least one of a user interface for setting the main wallet or a user interface for setting the wallet to be combined.

13. The apparatus as claimed in claim 9, wherein the regulation information includes at least one of information on whether the plurality of wallet applications is combined and information on a processing of an original wallet data after the wallet data is combined.

14. The apparatus as claimed in claim 9, wherein the processor is further configured to acquire the wallet data and the regulation information from a commerce platform in the mobile device through a predetermined Application Program Interface (API).

15. The apparatus as claimed in claim 9, wherein the processor is further configured to receive the wallet data through a wireless network from the mobile device, and transfers information of the combined wallet data and the combining application to the mobile device through the wireless network.
